# EUROPÄISCHE PATENTSCHRIFT

(11) **EP 1 240 045 B1**
(45) Veröffentlichungstag und Bekanntmachung des Hinweises auf die Patenterteilung: **21.05.2003**
(21) Anmeldenummer: 00983007.6
(22) Anmeldetag: 13.10.2000
(51) Int. Cl.: B60K 41/08

(54) **STEUERUNG FÜR EINE AUTOMATISCH BETÄTIGTE KUPPLUNG EINES KRAFTFAHRZEUGS UND VERFAHREN ZUM STEUERN EINER SOLCHEN KUPPLUNG**
CONTROL FOR AN AUTOMATICALLY OPERATED CLUTCH IN A VEHICLE AND METHOD FOR CONTROLLING SAID CLUTCH
SYSTEME DE REGULATION POUR UN EMBRAYAGE AUTOMATIQUE D'UN VEHICULE ET PROCEDE POUR REGULER UN TEL EMBRAYAGE

(30) Priorität: 26.10.1999 DE 19951527
(43) Veröffentlichungstag der Anmeldung: 18.09.2002
(73) Patentinhaber: SIEMENS AKTIENGESELLSCHAFT, 80333 München (DE)
(72) Erfinder: LANKES, Martin, 93093 Donaustauf (DE); LOHRENZ, Frank, 93053 Regensburg (DE); MICHAU, Peter, 93055 Regensburg (DE); NOCK, Ernst, 93053 Regensburg (DE); PINDL, Stephan, 93077 Bad Abbach (DE); WILD, Johann, 92318 Neumarkt (DE)
(86) Internationale Anmeldenummer: DE0003623
(87) Internationale Veröffentlichungsnummer: WO01030602

(56) Entgegenhaltungen:
- WO-A-91/02662
- WO-A-98/28162
- DE-A- 4 434 111
- US-A- 4 785 917
- US-A- 5 427 215

## Beschreibung

Die Erfindung betrifft eine Steuerung für eine automatisch betätigte Kupplung (Kupplungssteuerung) nach dem Oberbegriff von Anspruch 1 und ein Verfahren zum Steuern einer solchen Kupplung.

Eine derartige Steuerung für eine automatisch betätigte Kupplung ist zwischen dem Motor und dem Getriebe eines Kraftfahrzeugs angeordnet. Die Kupplung wird durch einen Aktuator einund ausgerückt, dessen Lage von einem Lageregelkreis gesteuert wird. Sie ermittelt einen Berührpunkt, bei dem Motordrehmoment beginnt auf das Getriebe übertragen zu werden, und sie veranlasst eine Motorsteuerung, die Motordrehzahl bei einem Schaltvorgang zu steuern.

Bei einer bekannten Bestimmungseinrichtung (EP 0 645 277 B1) wird die Kupplung im Leerlauf des Getriebes - d. h. bei ausgerückter Kupplung und Gangstellung auf Neutral - über einen Regelkreis soweit eingerückt, bis die Getriebeeingangswellendrehzahl einen bestimmten Prozentsatz der Motorleerlaufdrehzahl erreicht. Die Position der Kupplung bei dieser Situation wird als Berührpunkt bezeichnet.

Bekannt ist es auch, den Berührpunkt beim Anfahrvorgang zu bestimmen. Hierzu wird die Motordrehzahl während des Einkuppelns beim Anfahrvorgang beobachtet (DE 41 34 669 C2). Wird ein Überschwinger der Motordrehzahl beim Einrücken der Kupplung erkannt, so wird angenommen, daß der Berührpunkt sich in Richtung "ausgerückter Zustand der Kupplung" verschoben hat, und es erfolgt eine Korrektur des Berührpunkts in Richtung "eingerückter Zustand der Kupplung". Wird hingegen erkannt, dass das Zeitintervall des Angleichs von Motordrehzahl an die Eingangswellendrehzahl des Zielgangs bei gegebener Abtriebsdrehzahl zu klein ist, dass dieser Angleich also zu schnell erfolgt, so wird angenommen, daß der Berührpunkt sich in Richtung "eingerückter Zustand der Kupplung" verschoben hat, und es erfolgt eine Korrektur des Berührpunkts in Richtung "ausgerückter Zustand der Kupplung". Dieses Vorgehen basiert also auf einer Korrektur des Berührpunktes, nicht aber auf seiner direkten Bestimmung.

Eine dritte bekannte Möglichkeit der Bestimmung des Berührpunkts nutzt den Schaltvorgang in einen niedrigeren Gang (W098/28162). Da sich beim Wiedereinkuppeln die Motordrehzahl aufgrund der stärkeren Übersetzung des Zielgangs deutlich erhöht, wählt man diejenige Position der Kupplung als Berührpunkt, bei der sich während des Einkuppeins schlagartig die Motordrehzahl erhöht.

Bei einer gattungsgemäßen Steuerung für eine automatisch betätigte Kupplung (DE 44 34 111 A1) wird in dem Berührpunkt die Motordrehzahl auf einen Wert geregelt, der etwas unter der Drehzahl der Kupplungsausgangswelle liegt. Die Regelung erfolgt während der Fahrt in vorgegebenen Situationen und nicht während der Schaltungen. Der ermittelte Berührpunkt muss gespeichert werden.

Bei einem bekannten automatischen Getriebe mit einer automatisch betätigten Reibungskupplung wird die Stellung der Kupplung durch einen Hubsensor oder einen Berührungssensor erfasst (US 4785917 A). Eine Kupplungsstellung, bei der sich die Kupplung teilweise im Eingriff befindet und die als "LE point" bezeichnet wird, entspricht dem Übergang der Antriebsräder von einem Drehzustand zu einem Stationärzustand, das heißt wohl zum Stillstand. Dieser LE point muss eingestellt werden, und zwar in Abhängigkeit von der Abnutzung der Kupplungsscheibe oder des Vorliegens /Nichtvorliegens einer Last. Er wird gespeichert und für die Schaltung schnell angefahren. Wenn der Schlupf zwischen der Motordrehzahl und der Kupplungsdrehzahl kleiner als ein Schwellwert von etwa 10 U/min ist, wird nach einer Verzögerungszeit die Kupplung vollständig in Eingriff gebracht.

Bei keiner der bekannten Vorgehensweisen wird ein individueller Berührpunkt für jeden auftretenden Schaltvorgang bestimmt. Das heißt, es muß ein beim Hochschalten bestimmter Berührpunkt auch beim Zurückschalten oder beim Kriechmodus verwendet werden und umgekehrt, oder es werden für das Schalten in einen höheren oder niedrigeren Gang oder im Kriechmodus drei verschiedene Bestimmungsmethoden für den Berührpunkt benutzt. Ein weiteres hierbei in allen Fällen auftretendes Problem ist, daß der ermittelte Berührpunkt nicht direkt in den gerade stattfindenden Schaltvorgang, sondern erst in den nächstfolgenden einfließen kann. Somit muß durch komplexe Betrachtungen noch die Kupplungstemperatur beim jeweilige Schaltvorgang abgeschätzt werden, da diese ebenfalls einen deutlichen Einfluß auf den Berührpunkt besitzt. Damit fließen zusätzliche Fehler in die Bestimmung des Berührpunktes ein. Außerdem wird bei allen hier dargestellten Methoden die Synchronisierung des Getriebes "konventionell" (zum Beispiel über einen Synchronisierungsring) bewirkt.

Der Erfindung liegt die Aufgabe zugrunde, eine Steuerung für eine automatisch betätigte Kupplung eines Kraftfahrzeugs und ein Verfahren zum Steuern einer solchen Kupplung zu schaffen, die bei jedem Schaltvorgang den Berührpunkt der Kupplung selbsttätig bestimmt und einstellt.

Die Aufgabe der Erfindung wird durch eine Antriebsstrangsteuerung nach Anspruch 1 gelöst. Dabei wird die Kupplung durch einen Lageregler beim Beginn eines Schaltvorgangs in eine Position gebracht, bei der die Drehzahl der Getriebeeingangswelle bei ausgerücktem Gang (Neutralstellung) einem vorgegeben Anteil der Zieldrehzahl der Getriebeeingangswelle bei eingelegtem Zielgang entspricht, und die derart ermittelte Position wird als Berührpunkt für den nachfolgenden Schaltvorgang verwendet. Der Wert des vorgegebenen Anteils beträgt vorzugsweise 80 bis 95%.

Zweckmäßige Weiterbildungen der Erfindung sind in den Unteransprüchen niedergelegt.

Die Vorteile der Erfindung liegen insbesondere in folgendem. Die als Berührpunkt eingestellte Kupplungsposition hängt außer von den Kupplungscharakeristiken - wie die Kupplungsreibbelagdicke, die Temperatur und der Reibungskoeffizient - auch von der Motordrehzahl, von dem Zielgang und von der Abtriebsdrehzahl des Getriebes ab. All diese Größen gehen direkt (das heißt ohne zusätzliche Berechnungen) in die Bestimmung der Zielkupplungsposition ein. Die so bestimmte Kupplungsposition wird als jeweils optimaler Berührpunkt für den nun folgenden Schaltvorgang angesehen, und sie kann als Berührpunkt für diesen Schaltvorgang abgespeichert werden. Außerdem kann auf eine gesonderte Synchronisiereinrichtung im Getriebe verzichtet werden, da beim Einstellen des Berührpunktes zusätzlich auch eine Synchronisierung von Getriebeeingangswelle und Getriebeausgangswelle erfolgt.

Ausführungsbeispiele der Erfindung werden im folgenden anhand der Zeichnungen erläutert. Es zeigen:
- Figur: 1 den Antriebsstrang eines mit einer erfindungsgemäßen Kupplungssteuerung versehenen Kraftfahrzeugs;
- Figur 2: eine schematische Darstellung einer Kupplungssteuerung gemäß der Erfindung, aus der mehrere verschachtelte Regelkreise ersichtlich sind, und
- Figuren 3-5: den zeitlichen Verlauf von Kupplungsposition, Gangposition bzw. Motor- und Getriebeeingangsdrehzahlen bei einem Schaltvorgang mit einer Steuerung gemäß Figur 2.

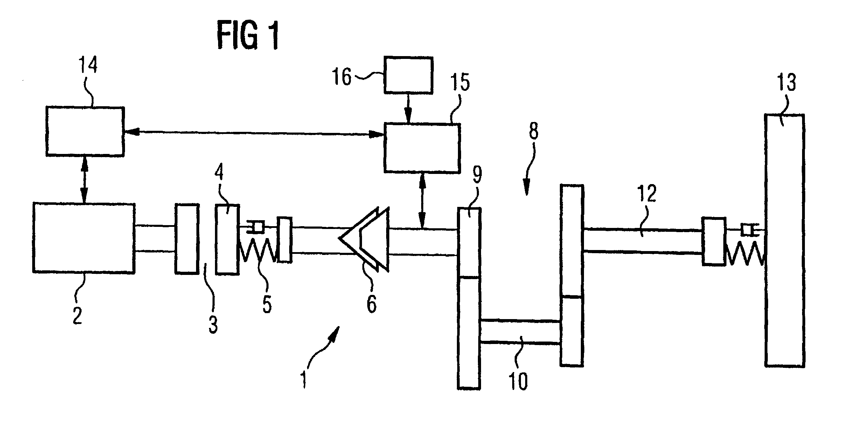

Der Antriebsstrang 1 eines Kraftfahrzeugs (Figur 1) schließt im Wesentlichen folgende Bestandteile ein: einen Motor 2, dessen Kurbelwelle mit einer Kupplung 3 verbunden ist. Eine Kupplungsscheibe 4, die mit einer Dämpfungsfeder 5 versehen ist, ist mit einer Synchronisiereinrichtung 6 eines Getriebes 8 verbunden. Die Synchronisiereinrichtung 6 ist mit einer Getriebehauptwelle 9 und diese mit einer Vorgelegewelle 10 verbunden. Eine Verbindungs- oder'Gelenkwelle 12 stellt die Verbindung zu der Nabe eines angetriebenen Rades 13 her.

Der Motor 2 wird von einer Motorsteuerung 14 und das Getriebe 8 von einer Getriebesteuerung 15 gesteuert. Ein KennfeldSpeicher 16, in dem die Position abgelegt ist, bei der gerade kein Drehmoment mehr von dem Motor 2 an das Getriebe 8 übertragen wird, ist durch eine Datenleitung mit der Getriebesteuerung 15 verbunden.

Es sind hier nur diejenigen Bestandteile des Antriebsstrangs dargestellt, die zur Erläuterung der Erfindung notwendig sind, seine weiteren Bestandteile sind allgemein bekannt. Auch ist von mehrfach vorhandenen Bestandteilen - zum Beispiel den angetriebenen Rädern - jeweils nur eines dargestellt.

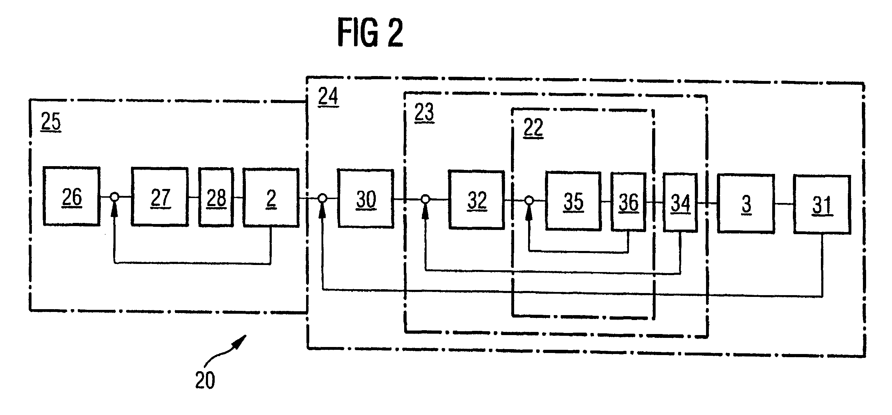

Eine aus Figur 2 ersichtliche Kupplungssteuerung 20 weist folgende verschachtelte Reglerkreise auf: einen Stromreglerkreis 22, einen Lagereglerkreis 23 sowie einen Getriebeeingangsdrehzahlreglerkreis 24, und außerdem einen Motordrehzahlreglerkreis 25. Der Motordrehzahlreglerkreis 25 schließt ein: einen Sollwertgeber 26 für die Motordrehzahl, einen Motordrehzahlregler 27, ein Drosselventil 28, das Bestandteil eines sogenannten elektronischen Gaspedals oder einer elektromotorischen Leistungssteuerung (EML) ist, und den Motor 2 des Kraftfahrzeugs.

Der Getriebeeingangsdrehzahlreglerkreis 24 schließt ein: einen Getriebeeingangsdrehzahlregler 30, die Kupplung 3 und eine Getriebeeingangswelle 31. Der Lageregelkreis 23 enthält einen Kupplungsaktuator-Lageregler 32 und ein hydraulisches Stellglied 34. Dieses Stellglied 34 betätigt die Kupplung und wird deshalb hier auch als Kupplungsaktuator bezeichnet. Der Stromreglerkreis 22 schließlich schließt ein einen Stromregler 35 und ein Proportionalventil 36.

Die Bedeutung von automatisierten Schaltgetrieben wird in Zukunft zunehmen. Dies ist insbesondere auf die gegenüber Handschaltgetrieben geringen zusätzlichen Kosten, die gegenüber herkömmlichen Automatikgetrieben deutlich geringeren Kosten, den reduzierten Kraftstoffverbrauch und den bekannten Vorteilen aller automatisierten Getriebe, wie z. B. der geringeren Ablenkung des Fahrers durch das Schalten - der damit dem Straßenverkehr mehr Aufmerksamkeit widmen kann - zurückzuführen.

Wichtig ist dabei das automatische Steuern der Kupplung und die dazu notwendige Kenntnis des Berührpunktes der Kupplung bei allen Fahr- und Betriebsbedingungen, wie zum Beispiel erhöhten Temperaturen, abgenutzten Kupplungsbelägen usw. Als Berührpunkt wird diejenige Position der Kupplung bezeichnet, bei der der Motor in einem vorgegebenen Ausmaß beginnt, Drehmoment an die Getriebeeingangswelle zu übertragen.

Mit der aus Figur 1 ersichtlichen Steuerung wird die Kupplung 3, die zum Beispiel als Reibungskupplung ausgebildet ist, bei Betriebszuständen wie Schalten und Anfahren automatisch gesteuert. Mit der Kupplung 3 soll - je nach Betriebszustand - das Drehmoment des Motors 4 eines Kraftfahrzeuges an das Getriebe 8 übertragen oder aber der Kraftfluß zwischen dem Motor 2 und dem Getriebe 8 unterbrochen werden. Außerdem führt die Kupplung 3 den Übergang zwischen den einzelnen Betriebszuständen durch (d.h. sie bewirkt dabei eine Drehmomentanpassung). Bei diesen Übergängen kommt es vor, dass die Kupplung mit Schlupf arbeitet, also nicht das volle Drehmoment des Motors an das Getriebe oder des Getriebes an den Motor (beim Schubbetrieb) überträgt. Das mit einer solchen Kupplungssteuerung ausgerüstete Kraftfahrzeug verfügt über eine Motorsteuerung und ein elektronisches Fahrpedal.

Ein wesentlicher Aspekt der Erfindung ist die Regelung der Kupplungsposition über einen Aktuator (oder auch: Aktor) entweder beim Stillstand des Fahrzeugs oder beim Beginn eines Schaltvorgangs auf einen Wert, bei dem die Drehzahl der Getriebeeingangswelle bei ausgelegtem Gang (Neutralstellung) einem vorgegebenen Prozentsatz, vorzugsweise 80 bis 95%, der Zieldrehzahl der Getriebeeingangswelle bei eingelegtem Zielgang entspricht. In absoluten Zahlen ausgedrückt liegt dabei die Drehzahl der Getriebeeingangswelle bei ausgelegtem Gang (Neutralstellung) etwa 50 bis 100 U/min unter der Motordrehzahl.

Die so eingestellte Kupplungsposition wird somit neben den Kupplungscharakeristika wie Kupplungsreibbelagdicke, Temperatur und Reibungskoeffizient auch von der Motordrehzahl, vom Zielgang und der Abtriebsdrehzahl des Getriebes abhängen. All diese Größen gehen direkt (ohne zusätzliche Verwendung von Formeln oder Berechnungen) in die Bestimmung der Zielkupplungsposition ein. Die somit bestimmte Kupplungsposition wird als optimaler Berührpunkt für den aktuellen Schaltvorgang angesehen und kann - muss aber nicht - als Berührpunkt für diesen Schaltvorgang abgespeichert werden. Da sich die Berührpunkte für unterschiedliche Schaltvorgänge unterscheiden werden, benötigt man je einen Berührpunkt für jeden möglichen Schaltvorgang.

Ein typischer Schaltvorgang läuft folgendermaßen ab:

Nach Vorgabe des Zielgangs wird die Kupplung auf eine in Kennfeldern des Speichers 16 abgelegte Position gebracht, bei der gerade kein Drehmoment mehr von dem Motor 2 auf das Getriebe 8 übertragen wird (bei leicht, d. h. mit einem Sicherheitsabstand, geöffneter Kupplung). Alternativ kann die Kupplung 3 auch vollständig geöffnet werden, falls man auf die angesprochenen Kennfelder von Kupplungspositionen verzichten will.

Anschließend wird die Gangposition über den Gangaktuator des Getriebes 8 auf die Neutralposition und in die richtige Zielgasse gebracht. Nun wird über eine Zielvorgabe an die Motorsteuerung 14 die Motordrehzahl auf den gewünschten Zielwert für den neuen Gang gebracht, der von der Übersetzung des Ganges und der Drehzahl des Getriebeabtriebs abhängt. Der Fahrer kann zu diesem Zeitpunkt das Drehmoment des Motors 2 nicht mehr über das Fahrpedal (elektronisches Gaspedal) steuern, d.h. es erfolgt eine Abkopplung des Fahrerwunsches während des Schaltvorgangs). Zeitlich parallel erfolgt eine Regelung der Kupplungsposition über den Kupplungsaktuator 34 derart, daß die Getriebeeingangswelle 31 eine Drehzahl annimmt, die einem definierten Prozentsatz ( zum Beispiel 80 bis 95%) der Getriebeabtriebsdrehzahl multipliziert mit der Übersetzung des Zielgangs entspricht.

Sobald beide Reglerkreise 24, 25 ihre Zielvorgaben erreicht haben, also die Motordrehzahl Nm und die Getriebeeingangsdrehzahl Ne im Zielbereich liegen, kann der Zielgang über den Gangaktuator angefahren werden. Um das Einlegen des Zielganges zu erleichtern, kann gleichzeitig die Kupplung wieder etwas (vorzugsweise um weitere 10%) geöffnet werden. Die derzeitige Position des Kupplungsaktuators 34 kann wieder - falls gewünscht - in den genannte Kennfeldern gespeichert werden - und zwar als Ausgangswert (Berührpunkt) für einen späteren, vergleichbaren Schaltvorgang (d. h. mit gleicher Schaltsequenz und ähnlichen Temperaturbedingungen).

Eine Synchronisierung des Getriebes über eine herkömmliche Synchronisiereinheit kann zwar, muß aber nun nicht mehr erfolgen, da die Drehzahlen von Getriebeeingangswelle 31 und Abtriebswelle 12 des Zielgangs durch den Regelkreis bereits sehr gut synchronisiert sind. Abschließend wird noch die Kupplung 3 wieder voll eingerückt und der Schaltvorgang ist damit abgeschlossen.

Dem Fahrer wird nun wieder das Steuern des Drehmoments des Motors über das Gas- oder Fahrpedal ermöglicht. Da sich das von dem Fahrer gewünschte Drehmoment des Motors 2 während des Schaltvorgangs ändern kann, ist eine gesteuerte Anpassung des Istdrehmoments am Ende des Schaltvorgangs an das Wunschdrehmoment des Fahrers über eine gewisse Zeitspanne, vorzugsweise über einige 100 ms, zweckmäßig.

Es ist nicht zwingend notwendig (aber möglich) den Berührpunkt der Kupplung 3 abzuspeichern, um ihn für den nächsten Schaltvorgang abzurufen. Vielmehr wird der Berührpunkt während des jeweils aktuellen Schaltvorgangs in einer für den jeweils aktuellen Schaltvorgang optimalen Art und Weise geregelt. Da der Schaltvorgang dann mit dieser Kupplungsposition durchgeführt wird, muß der Wert auch nicht für spätere Schaltungen abgespeichert werden.

Es entfällt auch somit eine aufwendige Korrektur des abzuspeichernden Wertes bezüglich der Temperatur der Kupplung (Temperaturkompensation). Für den Fall, dass das Kraftfahrzeug über eine Antriebsstrangsteuerung mit adaptiver Fahrstrategie verfügt (die ein Erkennen von sportlichem und ökonomischem Fahrverhalten, von Last und Belastung usw. ermöglicht), ermöglicht es die Kupplungssteuerung 20, die relative Drehzahldifferenz zwischen Motor 2 und Getriebeeingangswelle 31, auch fahrstrategieabhängig einzustellen. So ist es z. B. durchaus sinnvoll, die Drehzahldifferenz bei sportlichen Schaltungen (zum Erreichen kurzer Schaltzeiten) geringer zu halten als bei komfortablen Schaltungen (mit geringen Vibrationen).

Getrennt von den Schaltvorgängen sind noch der Leerlauf des Motors 2 und der Anfahrvorgang zu betrachten. Im Leerlauf (Gangneutralstellung) kann die Kupplungsposition ebenfalls so geregelt werden, daß die Drehzahl der Getriebeeingangswelle einen definierten Prozentsatz (etwa 80-95%) der Drehzahl der Motorkurbelwelle erreicht. Beim Anfahren sollte sicherheitshalber vor dem Einlegen des Ganges die Kupplung 3 vollständig ausgerückt werden, da hier eine genaue Regelung der Kupplungsposition über die Getriebeeingangsdrehzahl Ne nicht möglich ist. Das Einlegen eines Ganges zum Anfahren sollte auch nur bei geringen Fahrzeuggeschwindigkeiten (vorzugsweise kleiner als 10 km/h) ermöglicht werden. Weiterhin sollte beim Anfahren das Einrücken der Kupplung 3 deutlich langsamer erfolgen als bei den übrigen Schaltvorgängen, um ein Ruckeln des Fahrzeugs zu verhindern.

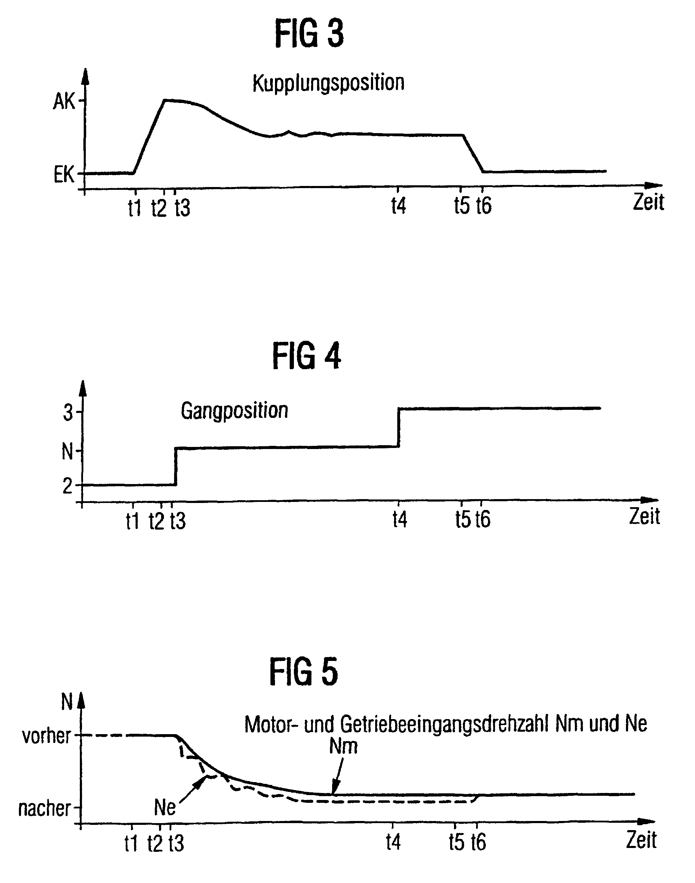

Der zeitliche Ablauf eines mit der erfindungsgemäßen Kupplungssteuerung durchgeführten Schaltvorgangs wird nun anhand der Figuren 3 bis 5 näher erläutert. Aus Figur 3 sind die Änderungen der Kupplungsposition, aus Figur 4 die der Gangposition und aus Figur 5 die der Motordrehzahl Nm und der Getriebeeingangsdrehzahl Ne während eines Schaltvorgangs ersichtlich.
- Zu einem Zeitpunkt t1 beginnt das Öffnen der Kupplung. Dem Fahrer wird die Steuerung des Motordrehmoments über das Fahrpedal entzogen.
- In der Zeitspanne zwischen t1 und einem Zeitpunkt t2 öffnet die Kupplung bis sie kein Drehmoment mehr überträgt oder bis sie ganz ausgekuppelt ist.
- Zu einem Zeitpunkt t3 rückt der Gangaktuator des Getriebes den Gang aus und der Gassenaktuator des Getriebes steuert die zu dem Zielgang gehörende Getriebegasse an, falls diese nicht schon vorliegt.
- In der Zeitspanne zwischen t3 und einem Zeitpunkt t4 werden die Motordrehzahl und die Getriebedrehzahl über die verschachtelten Regelkreise auf die Zielwerte, d. h. auf die Werte für den einzulegenden neuen Gang geregelt. Die Motordrehzahl wird von dem Motordrehzahlreglerkreis 25 über die Motorsteuerung 14 eingestellt. Das Getriebe 8 wird über den Lagereglerkreis 23 für die Kupplung 3 gesteuert.
- Zu dem Zeitpunkt t4 wird der neue Gang über den Gangaktuator eingelegt.
- Zwischen den Zeitpunkten t5 und t6 wird die Kupplung 3 wieder ganz geschlossen.
- Zu dem Zeitpunkt t6 wird dem Fahrer das Steuern des Motordrehmoments wieder ermöglicht.

Wird jeweils die Position des Berührpunkts gespeichert, kann durch eine - nach bekannten mathematischen Verfahren durchgeführte - statistische Auswertung von Berührpunkten, die unter analogen Bedingungen ermittelt worden sind, eine Veränderung des Zustands der Kupplung - zum Beispiel durch Temperatureinflüsse, durch Verschleiß usw. - erkannt werden. Die Veränderung kann dann beim Steuern der Kupplung berücksichtigt werden.

Ein Kennfeldspeicher 16 zum Steuern der automatisch betätigten Kupplung 3 beim Schalten des Getriebes 8 schließt im Wesentlichen folgende Schritte ein:
- nach Vorgabe eines Zielgangs wird die Kupplung 3 auf eine in Kennfeldern abgespeicherte Position gebracht, bei der gerade kein Drehmoment mehr von dem Motor an das Getriebe übertragen wird;
- die Schaltelemente des Getriebes werden danach durch einen Gangaktuator in die Neutralposition und in die vorgesehene Zielgasse gebracht;
- durch einen an die Motorsteuerung 14 übermittelten Befehl wird die Motordrehzahl Nm auf den Zielwert für den neuen Gang gebracht;
- gleichzeitig wird die Position der Kupplung 3 mit dem Kupplungsaktuator 14 derart geregelt, daß die Drehzahl der Getriebeeingangswelle 31 einen Wert annimmt, der einem vorgegebenen Anteil der Getriebeabtriebsdrehzahl multipliziert mit der Übersetzung des Zielgangs entspricht, und
- sobald die Motordrehzahl Nm und die Getriebeeingangsdrehzahl Ne die vorgegebenen Werte erreicht haben, wird der Zielgang durch den Gangaktuator eingerückt.

Die Kupplung 3 wird zweckmäßigerweise vor dem Einlegen des Zielgangs um einem vorgegebenen kleineren Anteil (zum Beispiel um 10%) der Getriebeabtriebsdrehzahl geöffnet.

Vorteilhaft ist, dass mit der Kupplungssteuerung 20 die Kupplungspositionierung während des Schaltvorgangs derart vollzogen wird, daß gleichzeitig erstens eine Synchronisierung des Getriebes erfolgt, zweitens eine Bestimmung des momentan für diesen Schaltvorgang optimalen Berührpunktes (inklusive Temperatureffekte) erfolgt und drittens die Kupplung nach dem Einlegen des Ganges nicht von dem vollständig ausgerückten Zustand in den vollständig eingerückten Zustand bewegt werden muß, was zu einer Zeitersparnis beim Schalten führt. Zusätzlich kann durch diese Art der Synchronisierung das Getriebe (insbesondere falls vorhanden die Synchronisiereinheit) geschont werden. Da die Synchronisierung zeitlich parallel mit der Anpassung der Motordrehzahl erfolgt, kann weitere Zeit beim Schalten eingespart werden. Ermöglicht wird dies durch den verschachtelten Regelkreis für Motordrehzahl, Getriebeeingangsdrehzahl und Kupplungsposition in Abhängigkeit von der Übersetzung des Zielgangs und der Drehzahl des Getriebeabtriebs.

## Patentansprüche

1. Steuerung für eine automatisch betätigte Kupplung (3),
- die zwischen dem Motor (2) und dem Getriebe (8) eines Kraftfahrzeugs angeordnet ist und die durch einen Aktuator (34) ein- und ausgerückt wird, dessen Lage von einem Lageregelkreis (23) gesteuert wird,
- durch die ein Berührpunkt ermittelt wird, bei dem Motordrehmoment beginnt auf das Getriebe (8) übertragen zu werden, und
- durch die eine Motorsteuerung (14) veranlasst wird, die Motordrehzahl bei einem Schaltvorgang zu steuern,
**dadurch gekennzeichnet,**
- **dass** der Motor (2) bei geöffneter Kupplung (3) durch einen Motordrehzahlregler (25) auf den Zielwert der Drehzahl für den neuen Gang gebracht wird,
- **dass** die Kupplung (3) durch einen Lageregler (32) beim Beginn eines Schaltvorgangs in eine Position gebracht wird, bei der die Drehzahl der Getriebeeingangswelle (31) bei ausgerücktem Gang einem vorgegeben Anteil der Zieldrehzahl der Getriebeeingangswelle (31) bei eingelegtem Zielgang entspricht, und
- **dass** die derart ermittelte Position als Berührpunkt für den aktuellen Schaltvorgang verwendet wird.

2. Steuerung nach Anspruch 1, **dadurch gekennzeichnet, dass** die derart ermittelte Position gespeichert wird.

3. Steuerung nach Anspruch 1, **dadurch gekennzeichnet, dass** der Wert des vorgegebenen Anteils 80 bis 95% beträgt.

4. Steuerung nach Anspruch 1, **dadurch gekennzeichnet, dass** in dem Berührpunkt die Drehzahl der Getriebeeingangswelle bei ausgelegtem Gang etwa 50 bis 100 U/min unter der Motordrehzahl liegt.

5. Steuerung nach Anspruch 1, **dadurch gekennzeichnet, dass** die Position des Berührpunkts gespeichert wird, und dass durch eine statistische Auswertung von unter analogen Bedingungen ermittelten Berührpunkten Veränderungen des Zustands der Kupplung (3) erkannt werden.

6. Verfahren zum Steuern einer automatisch betätigten Kupplung beim Schalten eines Getriebes, mit folgenden Schritten:
- nach Vorgabe eines Zielgangs wird die Kupplung auf eine in Kennfeldern abgespeicherte Position gebracht, bei der gerade kein Drehmoment mehr vom Motor an das Getriebe wird;
- die Schaltelemente des Getriebes werden danach durch einen Gangaktuator in die Neutralposition und in die vorgesehene Zielgasse gebracht;
- durch einen an die Motorsteuerung übermittelten Befehl wird die Motordrehzahl auf den Zielwert für den neuen Gang gebracht;
- gleichzeitig wird die Position der Kupplung mit einem Kupplungsaktuator derart geregelt, daß die Drehzahl der Getriebeeingangswelle einen Wert annimmt, der einem vorgegebenen Anteil der Getriebeabtriebsdrehzahl multipliziert mit der Übersetzung des Zielgangs entspricht, und
- sobald die Motordrehzahl und die Getriebeeingangsdrehzahl die vorgegebenen Werte erreicht haben, wird der Zielgang durch den Gangaktuator eingerückt.

7. Verfahren nach Anspruch 6, **dadurch gekennzeichnet, dass** das Steuern des Drehmoments über das Fahrpedal während der Einstellung der Motordrehzahl während eines Schaltvorgangs unterbunden wird.

## Claims

1. Control device for an automatically activated clutch (3)
• which is located between the engine (2) and the transmission system (8) of a motor vehicle and which is engaged and disengaged by an actuator (34), the position of which is controlled by a position control circuit (23),
- which is used to determine a contact point at which engine torque starts to be transferred to the transmission system (8), and
- which is used to activate an engine control system (14) to control the engine speed during a gear change operation,
**characterised in that**
- when the clutch (3) is disengaged, the engine (2) is brought to the target value for the speed for the new gear by an engine speed controller (25),
• at the start of a gear change operation, the clutch (3) is moved by a position controller (32) into a position in which the speed of the transmission input shaft (31) with no gear engaged corresponds to a predefined percentage of the target speed of the transmission input shaft (31) with the target gear engaged, and
- the position thus determined is used as the contact point for the current gear change operation.

2. Control device according to Claim 1, **characterised in that** the position thus determined is stored.

3. Control device according to Claim 1, **characterised in that** the value of the predefined percentage is 80 to 95%.

4. Control device according to Claim 1, **characterised in that** in the contact point the speed of the transmission input shaft with no gear engaged is around 50 to 100 rpm below the engine speed.

5. Control device according to Claim 1, **characterised in that** the position of the contact point is stored and that changes in the status of the clutch (3) are detected by statistical analysis of contact points determined under analogous conditions.

6. Method to control an automatically activated clutch during gear changing, with the following steps:
• after specification of a target gear, the clutch is moved into a position stored in characteristic maps, in which no more torque is currently transferred from the engine to the transmission system;
• the gear change elements of the transmission system are then moved by a gear actuator into the neutral position and into the intended target gear;
- the engine speed is brought to the target value for the new gear by a command transmitted to the engine control system;
• at the same time the position of the clutch is controlled using a clutch actuator such that the speed of the transmission input shaft assumes a value which corresponds to a predefined percentage of the transmission output speed multiplied by the gear transmission ratio of the target gear, and
- as soon as the engine speed and transmission input speed have reached the predefined values, the target gear is engaged by the gear actuator.

7. Method according to Claim 6, **characterised in that** control of the torque by means of the accelerator pedal during adjustment of the engine speed is prevented during a gear change operation.

## Revendications

1. Commande pour un mécanisme d'embrayage actionné automatiquement (3)
- qui est disposée entre le moteur (2) et la boîte de vitesses (8) d'un véhicule automobile et qui est embrayée et débrayée à l'aide d'un actionneur (34) dont la position est commandée par un circuit régulateur de position (23),
- par le biais de laquelle est déterminé un point de contact auquel le couple du moteur commence à être transmis à la boîte de vitesses (8), et
- par le biais de laquelle une commande de moteur (14) reçoit l'ordre de commander la vitesse de rotation du moteur lors d'un changement de vitesse,
**caractérisée en ce que**,
- le moteur (2), lorsque le mécanisme d'embrayage (3) est ouvert, est amené par le biais d'un régulateur de vitesse de rotation du moteur (25) à une valeur visée de la vitesse de rotation pour le nouveau rapport,
- le mécanisme d'embrayage (3) est amené, par le biais d'un régulateur de position (32) au début d'un changement de vitesse, dans une position dans laquelle la vitesse de rotation de l'arbre d'entrée de la boîte de vitesses (31) lorsque le rapport est désengagé correspond à une proportion prédéfinie de la vitesse de rotation visée de l'arbre d'entrée de la boîte de vitesses (31) lorsque le rapport est engagé, et
- la position ainsi déterminée est utilisée comme point de contact pour le changement de vitesse en cours.

2. Commande selon la revendication 1, **caractérisée en ce que** la position ainsi déterminée est mémorisée.

3. Commande selon la revendication 1, **caractérisée en ce que** la valeur de la proportion prédéfinie est comprise entre 80 et 95 %.

4. Commande selon la revendication 1, **caractérisée en ce qu'**au point de contact, la vitesse de rotation de l'arbre d'entrée de la boîte de vitesses lorsque le rapport est désengagé est inférieure d'environ 50 à 100 t/min. à la vitesse de rotation du moteur.

5. Commande selon la revendication 1, **caractérisée en ce que** la position du point de contact est mémorisée et que des changements d'états du mécanisme d'embrayage (3) sont détectés par une analyse statistique des points de contact déterminés dans des conditions analogues.

6. Procédé pour commander un mécanisme d'embrayage actionné automatiquement lors du changement de vitesse d'une boîte de vitesses comprenant les étapes suivantes :
- après indication d'un rapport visé, le mécanisme d'embrayage est amené dans une position mémorisée dans des zones de caractéristiques dans laquelle presque aucun couple n'est plus transmis du moteur vers la boîte de vitesses ;
- les éléments de changement de vitesse de la boîte de vitesses sont ensuite amenés au point mort par un actionneur de rapport, puis dans la voie de destination prévue ;
- la vitesse de rotation du moteur est amenée à la valeur visée pour le nouveau rapport par une instruction transmise à la commande de moteur ;
- simultanément, la position du mécanisme d'embrayage est réglée à l'aide d'un actionneur de mécanisme d'embrayage de telle manière que la vitesse de rotation de l'arbre d'entrée de la boîte de vitesses prenne une valeur qui correspond à une proportion prédéfinie de la vitesse de rotation de sortie de la boîte de vitesses multipliée par le facteur de multiplication du rapport visé ; et
- dès que la vitesse de rotation du moteur et la vitesse de rotation d'entrée de la boîte de vitesses ont atteint les valeurs prédéfinies, le rapport visé est engagé par l'actionneur de rapport.

7. Procédé selon la revendication 6, **caractérisé en ce que** la commande du couple par le biais de la pédale d'accélérateur est inhibée pendant le réglage de la vitesse de rotation du moteur pendant un changement de vitesse.
